(19)

Europäisches
Patentamt

European
Patent Office

Office européen
des brevets

(11) **EP 4 509 311 A1**

(12) **EUROPEAN PATENT APPLICATION**

(43) Date of publication:
**19.02.2025 Bulletin 2025/08**

(21) Application number: **24185963.6**

(22) Date of filing: **02.07.2024**

(51) International Patent Classification (IPC):
**B32B 27/20** *(2006.01)*    **B32B 15/08** *(2006.01)*
**B32B 15/14** *(2006.01)*    **B32B 15/20** *(2006.01)*

(52) Cooperative Patent Classification (CPC):
**B32B 27/20;** B32B 15/08; B32B 15/14; B32B 15/20;
B32B 2262/101; H01M 10/658; H01M 50/293

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.08.2023 KR 20230106765**

(71) Applicants:
• **Samsung SDI Co., Ltd.**
  **Yongin-si, Gyeonggi-do 17084 (KR)**
• **DAEHYUP TECH CO., LTD.**
  **Ulsan 44968 (KR)**

(72) Inventors:
• **Woo, Myung Heui**
  **17084 Yongin-si, Gyeonggi-do (KR)**
• **Ra, Ha Na**
  **17084 Yongin-si, Gyeonggi-do (KR)**

• **Park, Hye Jin**
  **17084 Yongin-si, Gyeonggi-do (KR)**
• **Yang, Seung Yong**
  **17084 Yongin-si, Gyeonggi-do (KR)**
• **Lee, Jae Hyun**
  **17084 Yongin-si, Gyeonggi-do (KR)**
• **Ryu, Bo Kyung**
  **17084 Yongin-si, Gyeonggi-do (KR)**
• **Kim, Sang Hoon**
  **17084 Yongin-si, Gyeonggi-do (KR)**
• **Hwang, Jong Pil**
  **45014 Ulju-gun, Ulsan (KR)**
• **Choi, Hyung Sek**
  **45014 Ulju-gun, Ulsan (KR)**
• **Kim, Ho Joon**
  **45014 Ulju-gun, Ulsan (KR)**

(74) Representative: **Gulde & Partner**
  **Patent- und Rechtsanwaltskanzlei mbB**
  **Berliner Freiheit 2**
  **10785 Berlin (DE)**

(54) **BATTERY INSULATION SHEET, MANUFACTURING METHOD THEREOF, AND BATTERY MODULE COMPRISING THE BATTERY INSULATION SHEET**

(57)    A battery insulation sheet having a structure in which a first substrate, an aerogel layer, and a second substrate are laminated, wherein opposite surfaces of the aerogel layer is in contact with the first substrate or the second substrate adjacent thereto. Example embodiments also include a method of manufacturing a battery insulation sheet, and a battery module including the battery insulation sheet.

FIG. 1

<u>100</u>

130
120
110

**Description**

**BACKGROUND**

**1. Field**

The present disclosure relates to a battery insulation sheet, a method of manufacturing the battery insulation sheet, and a battery module including the battery insulation sheet.

**2. Description of the Related Art**

A secondary battery is or includes a power storage system that converts electrical energy into chemical energy, stores the chemical energy, and provides high energy density. Compared to a primary battery, which is typically not rechargeable, a secondary battery is rechargeable and is often used in information technology (IT) devices such as, e.g., smartphones, cellular phones, laptop computers, tablet computers, and the like. There is substantial interest in electric vehicles to reduce or prevent environmental pollution, and a high-capacity secondary battery may be adopted in electric vehicles. The secondary battery may exhibit characteristics such as, e.g., high density, high output, and stability.

When a plurality of high-capacity cells is included, as in a lithium ion secondary battery, one cell may overheat and may go into thermal runaway for various reasons, which may adversely affect other cells adjacent thereto. Therefore, it may be desirable to thermally isolate neighboring cells from each other.

Conventionally, a plate or an insulating resin sheet is disposed between cells to isolate and insulate neighboring cells from each other.

**SUMMARY**

The present disclosure relates to a battery insulation sheet that is manufactured through a simple process and that has improved, desired or advantageous thermal insulation, compressibility, durability, and dustiness, a method of manufacturing the battery insulation sheet, and a battery module including the battery insulation sheet.

An embodiment includes a battery insulation sheet having a structure in which a first substrate, an aerogel layer, and a second substrate are laminated, e.g., sequentially laminated, wherein each of opposite surfaces of the aerogel layer directly faces the first substrate or the second substrate adjacent thereto. In an example, each opposite surface of the aerogel layer is in contact with the first substrate or the second substrate adjacent thereto.

A separate layer including an adhesive may not be provided between the aerogel layer and the first substrate or the second substrate. For example, a separate layer including an adhesive between the aerogel layer and the first substrate or the second substrate may be omitted.

The aerogel layer may satisfy Formula 1 below.

$$[Formula\ 1]$$

$$0.1 \le PD1 \le 0.5, \text{ where } PD1 = PA/PB$$

In Formula 1 above, PA indicates the mass per unit volume $(g/cm^3)$ of the aerogel layer after a pressure of 0 kN, equivalent to no pressure, is vertically applied to the aerogel layer, and PB indicates the mass per unit volume $(g/cm^3)$ of the aerogel layer after a pressure of 5 kN is vertically applied to the aerogel layer.

The aerogel layer may satisfy Formula 2 below.

$$[Formula\ 2]$$

$$0.1 \le PD2 \le 0.4, PD2 = PB/PC$$

In Formula 2 above, PB indicates the mass per unit volume $(g/cm^3)$ of the aerogel layer after a pressure of 5 kN is vertically applied to the aerogel layer, and PC indicates the mass per unit volume $(g/cm^3)$ of the aerogel layer after a pressure of 20 kN is vertically applied to the aerogel layer.

Each, or at least one, of the first substrate and the second substrate may comprise a resin, a metal, an inorganic material other than the metal, or a composite thereof.

Each, or at least one, of the first substrate and the second substrate may have an air permeability of 800 sec/100cc to 40,000 sec/100cc.

The aerogel layer may comprise or consist of a fibrous support, an aerogel, and a functional material including a binder, a dispersant, or a combination thereof. The aerogel layer may comprise or consist of a fibrous support, an aerogel, and a functional material. The functional material comprises a binder and/or a dispersant.

The fibrous support may consist of or comprise at least one selected from the group consisting of natural fiber, silica fiber, glass fiber, ceramic fiber, carbon fiber, graphite fiber, mineral fiber, and polymer fiber.

The aerogel may have a BET specific surface area of about 500 m$^2$/g to about 1,000 m$^2$/g. The BET specific surface area is determined by the ISO 9277 standard for calculating the specific surface area of solids. BET refers to Brunauer, Emmett and Teller, the inventors of BET theory, which is the basis for calculating the BET specific surface area according to ISO 9277 standard.

The binder may comprise an aqueous polymer binder.

The dispersant may be at least one of a surfactant and a phosphate-based salt.

The fibrous support may be included so as to account for about 25 wt% to 60 wt%, the aerogel may be included so as to account for about 30 wt% to 70 wt%, and the binder may be included so as to account for about 2 wt% to 15 wt%, based on the total amount of the aerogel layer.

The fibrous support may be included so as to account for about 25 wt% to 60 wt%, the aerogel may be included so as to account for about 30 wt% to 70 wt%, the binder may be included so as to account for about 2 wt% to 15 wt%, and the dispersant may be included so as to account for about 0.1 wt% to 5 wt%, based on the total amount of the aerogel layer.

Each, or at least one, of the first substrate and the second substrate may have a thickness of about 0.01 mm to 5 mm, and the aerogel layer may have a thickness of about 1 mm to 10 mm.

Another aspect of the disclosure relates to a method of manufacturing a battery insulation sheet, the method including applying an aerogel composition to a first substrate, laminating a second substrate on the applied aerogel composition to manufacture a laminate, controlling the thickness of the laminate, and drying the laminate.

The aerogel composition may be manufactured by mixing a solvent with a functional material including a binder, a dispersant, or a combination thereof, to manufacture a solvent mixture, mixing the solvent mixture with aerogel powder to manufacture an aerogel mixture, and mixing the aerogel mixture with a fibrous support to manufacture an aerogel composition.

The solvent may be at least one of a polar solvent and a non-polar solvent.

In controlling the thickness of the laminate, the thickness of the laminate may be controlled by pressing using a roller.

Drying the laminate may be performed at a temperature of about 25 °C to 100 °C.

A further aspect of the disclosure relates to a battery module including a plurality of cells and the battery insulation sheet provided between the plurality of cells, wherein the first substrate and the second substrate of the battery insulation sheet are disposed so as to face cells adjacent thereto.

## BRIEF DESCRIPTION OF THE DRAWINGS

The accompanying drawings, which are incorporated in this specification, illustrate example embodiments and serve to further illustrate the technical ideas of the disclosure in conjunction with the detailed description of example embodiments that follows, and the disclosure is not to be construed as limited to what is shown in such drawings. In the drawings:

FIG. 1 is a schematic view showing the structure of a battery insulation sheet according to an example embodiment;
FIG. 2 is a schematic view showing the battery insulation sheet according to the example embodiment formed between a plurality of cells; and
FIG. 3 is a schematic view showing the structure of a battery insulation sheet according to Comparative Example 1.

## DETAILED DESCRIPTION OF EXEMPLARY EMBODIMENTS

Hereinafter, example embodiments will be described in detail such that a person having ordinary skill in the art can easily implement the example embodiments. However, embodiments may be implemented in many different forms and are not limited to the embodiments described herein.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

An insulating material, which is a material that hinders or prevents heat from flowing from higher to lower temperatures, may be used not only in refrigerators, cold storages, and buildings, but also in a variety of other industries, including, e.g., the aircraft, electronics, and automotive industries.

The insulating material needs to have improved, desired or advantageous thermal insulation through low thermal conductivity and mechanical strength to, e.g., maintain thermal insulation over time.

An aerogel, which is typically a transparent or translucent advanced material having a nanoporous structure, exhibits very low density and low thermal conductivity. Therefore, the aerogel has a high potential as an insulating material, and is considered to be a highly efficient super insulating material that can be used in a variety of industrial applications.

A compelling advantage of the aerogel is that the aerogel has a lower thermal conductivity than conventional organic insulating materials such as, e.g., Styrofoam, and that the aerogel is capable of solving, or helping to solve, critical weaknesses of organic insulating materials, such as, e.g., fire vulnerability and generation of harmful gases in the event of fire.

Generally, however, the aerogel has been found to be highly brittle, easily breaking upon slight impact, and difficult to process into small thicknesses and shapes, making it challenging to manufacture an insulation material using the aerogel alone despite improved, desired or advantageous thermal insulation.

A battery insulation sheet according to an example embodiment may have a structure in which a first substrate, an aerogel layer, and a second substrate are sequentially laminated, wherein each of opposite surfaces of the aerogel layer may directly face the first substrate or the second substrate adjacent thereto.

The battery insulation sheet having the above structure may have improved, desired or advantageous thermal insulation, durability, and compressibility, may have a low manufacturing process cost, and may reduce or prevent the generation of dust from an aerogel during a manufacturing process as well as during actual use.

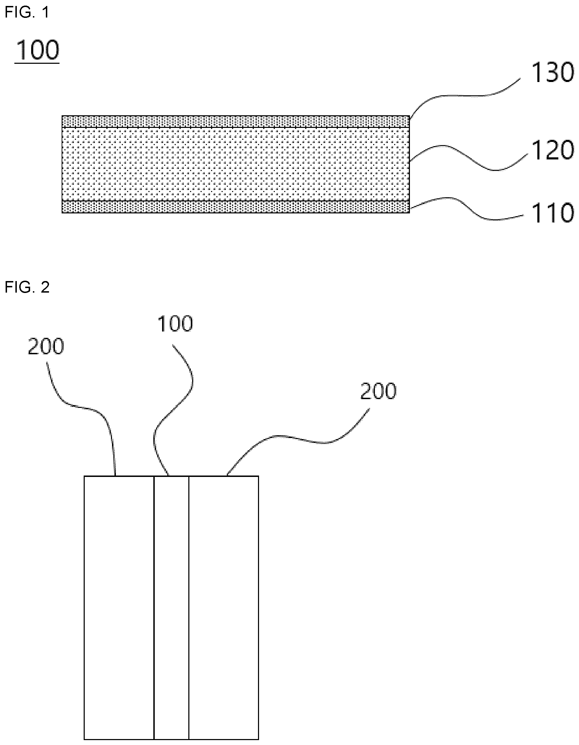

FIG. 1 is a schematic view showing the structure of a battery insulation sheet according to an example embodiment.

Referring to FIG. 1, the battery insulation sheet 100 may be formed in a structure including a first substrate 110, an aerogel layer 120 formed on the first substrate 110, and a second substrate 130 formed on the aerogel layer 120, wherein the first substrate 110, the aerogel layer 120, and the second substrate 130 are laminated, e.g., sequentially laminated.

A separate layer including an adhesive may not be provided between the aerogel layer 120 and the first substrate 110 or the second substrate 130. For example, separate layer including an adhesive between the aerogel layer 120 and the first substrate 110 or the second substrate 130 may be omitted. The battery insulation sheet 100 may be manufactured through a one-step process using a method described hereinafter under conditions described hereinafter, whereby a battery insulation sheet may be manufactured so as to have a structure in which a first substrate, an aerogel layer, and a second substrate are laminated, e.g., sequentially laminated, without an adhesive.

A variety of substrates, such as, without being limited to, a resin, a metal, an inorganic material other than the metal, or a composite thereof, may be used as each of the first substrate and the second substrate. The form of the substrate may be, without being limited to, a film, a membrane, a sheet, etc.

The resin may consist of or comprise at least one selected from the group consisting ofpolyethylene, polypropylene, polystyrene, polyethylene terephthalate, polyepoxy, and polyamide.

The metal may consist of or comprise at least one selected from the group consisting of, for example, copper, nickel, cobalt, iron, chromium, vanadium, palladium, ruthenium, rhodium, molybdenum, tungsten, iridium, silver, gold, and platinum. When a substrate made of, or comprising, any one or more of the above metals is used, the substrate may be subjected to anti-corrosion treatment or insulating treatment as needed.

The inorganic material may consist of or comprise at least one selected from the group consisting of calcium carbonate ($CaCO_3$), talc, and mica.

As an example, each, or at least one, of the first substrate and the second substrate may include an inorganic material, and as a another example, each, or at least one, of the first substrate and the second substrate may include mica. In this case, thermal insulation, durability, and the like, of the insulation sheet may be improved.

Each, or at least one, of the first substrate and second substrate may include an inorganic material having an air permeability of about 800 sec/100cc to 40,000 sec/100cc. For example, air permeability may be adjustable depending on the thickness of the substrate, and may be about 1,000 sec/100cc to 30,000 sec/100cc, about 1,000 sec/100cc to 3,000 sec/100cc, about 6,000 sec/100cc to 10,000 sec/100cc, about 10,000 sec/100cc to 30,000 sec/100cc, or about 20,000 sec/100cc to 30,000 sec/100cc. Air permeability is expressed as the time (in sec) it takes for 100 cc of air to pass through an air permeability meter (Asahi Seiko OKEN Type air permeation tester model EGO1-55-1MR) upon measurement using a measurement method according to ISO 5635-5. By forming an aerogel layer between a first substrate and a second substrate, each, or at least one thereof, including an inorganic material having air permeability within the above range, the binding between each of the first substrate and the second substrate and the aerogel layer may be improved, desired or advantageous without an adhesive layer. When an adhesive layer is formed, an adhesive component may be weak to heat, whereby the adhesive layer may tear easily at a high temperature of about 200 °C or higher, but the battery insulation sheet according to the example embodiment may not include an adhesive layer and may have improved, desired or advantageous stability at high temperatures.

The thickness of each, or of at least one, of the first substrate and the second substrate may be about 0.01 mm to 5 mm, about 0.05 mm to 3 mm, or about 0.1 mm to 1 mm. By forming an aerogel layer between the first and second substrates having thicknesses within any one of the above ranges, a battery insulation sheet having improved, desired or advantageous thermal insulation, durability, and dustiness may be configured.

In an example embodiment, the aerogel layer may satisfy Formula 1 below.

$$[Formula\ 1]$$

$$0.1 \leq PD1 \leq 0.5,\ PD1 = PA/PB$$

In Formula 1 above, PA indicates the mass per unit volume (g/cm$^3$) of the aerogel layer after a pressure of 0 kN, or no pressure, is vertically applied to the aerogel layer, and PB indicates the mass per unit volume (g/cm$^3$) of the aerogel layer after a pressure of about 5 kN is vertically applied to the aerogel layer. The value of PD1 may be, for example, about 0.1 to 0.5, about 0.1 to 0.4, or about 0.2 to 0.3. When the value of PD1 is within any of the above ranges, resistance to external impact or compression during mounting of a module may be improved, desired or advantageous.

The aerogel layer may satisfy Formula 2 below.

$$[Formula\ 2]$$

$$0.1 \leq PD2 \leq 0.4,\ PD2 = PB/PC$$

In Formula 2 above, PB indicates the mass per unit volume (g/cm$^3$) of the aerogel layer after a pressure of about 5 kN is vertically applied to the aerogel layer, and PC indicates the mass per unit volume (g/cm$^3$) of the aerogel layer after a pressure of about 20 kN is vertically applied to the aerogel layer. The value of PD2 may be, for example, about 0.1 to 0.4, about 0.15 to 0.35, or about 0.25 to 0.35. When the value of PD2 is within any of the above ranges, resistance to swelling of an inner cell may be improved, desired or advantageous.

The values of PD1 and PD2 may be indicative of the compressive density of the aerogel layer, whereby the extent of an empty space in the aerogel layer according to the applied pressure may be determined. An aerogel layer according to an example embodiment may have the value of PD1, the value of PD2, or the values of PD1 and PD2 within the above ranges as a result of an empty space therein increasing due to a substantially uniformly distributed fibrous support and an aerogel present in a coating state on the surface of the fibrous support according to a manufacturing method described hereinafter. By satisfying the value of PD1, the value of PD2, or the values of PD1 and PD2, as described above, the material may have improved, desired or advantageous resistance to external impact or internal swelling, thermal insulation, and compressibility.

In an example embodiment, the aerogel layer may include a fibrous support, an aerogel, and a functional material including a binder, a dispersant, or a combination thereof.

The thickness of the aerogel layer may be about 1 mm to 10 mm, about 1 mm to 5 mm, or about 1 mm to 3 mm. By forming an aerogel layer on a substrate having a thickness within any of the above ranges, an insulation sheet having improved, desired or advantageous thermal insulation and compressibility may be manufactured.

In an example embodiment, the fibrous support may be included in the aerogel layer to improve durability of the battery insulation sheet.

The fibrous support may include fiber used as a support for ordinary insulating materials. For example, the fibrous support may consist of or comprise at least one selected from the group consisting of natural fiber, silica fiber, glass fiber, ceramic fiber, carbon fiber, graphite fiber, mineral fiber, and polymer fiber. As an example, the fibrous support may include, but is not limited to, glass fiber.

The natural fiber may consist of or comprise at least one selected from the group consisting of, for example, hemp, jute, flax, coir, Kenaf, and cellulose.

The mineral fiber may consist of or comprise at least one selected from the group consisting of, for example, basalt, diatomite, alumina, silica, slag, and rock.

The polymer fiber may consist of or comprise at least one selected from the group consisting of, for example, nylon, polyimide, polyamide, polybenzimidazole, polybenzoxazole, polyamideimide, polyethylene terephthalate, polybutylene terephthalate, polyester, polyethylene (PE), and polypropylene (PP). As an example, the polymer fiber may comprise at least one selected from the group consisting of, without being limited to, polyimide, polyamide, and polybenzimidazole.

The fibrous support may be, for example, in the form of wool or chopped strands, but is not limited thereto.

The diameter of the fibrous support may be, for example, about 0.1 μm to 20 μm, about 0.1 μm to 15 μm, about 0.1 μm to 5 μm, about 1 μm to 15 μm, or about 3 μm to 10 μm. By including a fibrous support having a diameter within any of the above ranges, the structure of the aerogel layer may be stiffened, and manufacturing costs thereof may be reduced.

The length of the fibrous support may be, for example, about 50 μm to 1000 μm, about 70 μm to 800 μm, or about 100 μm to 600 μm. By including a fibrous support having a length within any of the above ranges, the aerogel layer may be formed robustly, and durability may be improved.

The content of the fibrous support may be about 5 wt% to 70 wt%, about 25 wt% to 60 wt%, or about 30 wt% to 50 wt%, based on the total amount of the aerogel layer. Durability of a battery insulation sheet that includes an aerogel layer having a fibrous support in a content within any of the above ranges may be improved.

In an example embodiment, the aerogel may have a BET specific surface area of about 500 $m^2/g$ to 1,000 $m^2/g$. For example, the aerogel may have a BET specific surface area of about 500 $m^2/g$ to 950 $m^2/g$, about 550 $m^2/g$ to 950 $m^2/g$, or about 600 $m^2/g$ to 900 $m^2/g$. When the aerogel having the BET specific surface area value within any of the above ranges is included, the insulation sheet may be capable of effectively reducing or preventing heat transfer and heat propagation between a plurality of cells.

The average particle size D50 of the aerogel may be about 5 $\mu$m to 200 $\mu$m, about 10 $\mu$m to 100 $\mu$m, or about 20 $\mu$m to 50 $\mu$m. When the aerogel having the average particle size within any of the above ranges is included, thermal insulation may be improved, whereby heat transfer between the plurality of cells may be delayed.

The content of the aerogel may be about 10 wt% to 90 wt%, about 30 wt% to 70 wt%, or about 40 wt% to 60 wt%, based on the total amount of the aerogel layer. When a battery insulation sheet including the aerogel within any of the above ranges is manufactured, thermal insulation of the battery insulation sheet may be improved.

In an example embodiment, the binder may include an aqueous polymer binder. For example, the aqueous polymer binder may consist of or comprise at least one selected from the group consisting of a water-based polymer, an anionic water-soluble polymer, a cationic water-soluble polymer, and a water-dispersible polymer.

The water-based polymer may be or include at least one of, for example, without being limited to, polyvinyl alcohol, polyethylene oxide, polyacrylamide, and polyvinylpyrrolidone.

The anionic water-soluble polymer may consist of or comprise at least one selected from the group consisting of carboxylic acid, sulfonic acid, sulfuric acid ester, phosphoric acid ester, and a polymer having functional groups of salts thereof. For example, the anionic water-soluble polymer may consist of or comprise a polymer having a carboxylic acid group, and may include, without being limited to, polymaleic acid as an example.

The cationic water-soluble polymer may consist of or comprise at least one selected from the group consisting of amine, ammonium, phosphonium, sulfonium, and a polymer having functional groups of salts thereof. For example, the cationic water-soluble polymer may consist of or comprise a polymer having an amine group, and may consist of or comprise at least one of, without being limited to, polyethylene amine and polyamine as an example.

The water-dispersible polymer may consist of or comprise, without being limited to, at least one of water-dispersible polyurethane and water-dispersible polyester.

The binder may comprise a water-based polymer and a water-dispersible polymer. For example, the binder may comprise a water-based polymer having binder properties and dispersing properties, and water-dispersible polyurethane having fire-resistant properties. As an example, the binder may include polyvinyl alcohol and water-dispersible polyurethane.

The weight ratio of the water-based polymer to the water-dispersible polymer may be about 1:1 to 1:5, about 1:1 to 1:4, or about 1:2 to 1:3. When the weight ratio of the water-based polymer to the water-dispersible polymer is within any of the above ranges, fire resistance and mechanical properties of the insulation sheet may be further improved in addition to the thermal insulation, dustiness, and compression properties of the insulation sheet.

The content of the binder may be about 0.5 wt% to 20 wt%, about 2 wt% to 15 wt%, or about 8 wt% to 15 wt%, based on the total amount of the aerogel layer. When a battery insulation sheet is manufactured using an aerogel composition including a binder within any of the above ranges, dustiness of the battery insulation sheet may be improved.

In an example embodiment, the dispersant may be or comprise at least one of a surfactant and a phosphate-based salt. For example, the dispersant may include at least one of, without being limited to, a non-ionic surfactant, an anionic surfactant, an amphoteric surfactant, a natural surfactant such as lecithin, and phosphate.

When the dispersant is further included, the fibrous support and the aerogel may be present in the aerogel layer in a more uniformly dispersed state.

The content of the dispersant may be about 0.1 wt% to 6 wt%, about 0.1 wt% to 5 wt%, or about 0.1 wt% to 3 wt%, based on the total amount of the aerogel layer. When the dispersant is included within the above range, it is possible to manufacture a battery insulation sheet having improved, desired or advantageous thermal insulation, compressibility, and dustiness.

The binder and the dispersant may be included in a weight ratio of about 1:0.001 to 1:0.67, about 1:0.001 to 1:0.5, or about 1:0.001 to 1:0.3. Mixing the binder and the dispersant in a weight ratio within any of the above ranges may result in more uniform dispersion of the aerogel in the aerogel layer.

In an example embodiment, the fibrous support may be included so as to account for about 5 wt% to 70 wt%, the aerogel may be included so as to account for about 10 wt% to 90 wt%, and the functional material may be included so as to account for about 0.5 wt% to 20 wt%, based on the total amount of the aerogel layer.

As an example, the fibrous support may be included so as to account for about 25 wt% to 60 wt%, the aerogel may be included so as to account for about 30 wt% to 70 wt%, and the binder may be included so as to account for about 2 wt% to 15 wt%, based on the total amount of the aerogel layer.

As an example, the fibrous support may be included so as to account for about 30 wt% to 50 wt%, the aerogel may be included so as to account for about 40 wt% to 60 wt%, and the binder may be included so as to account for about 8 wt% to 15 wt%, based on the total amount of the aerogel layer. When the aerogel layer is formed within any of the above ranges, it is possible to realize improved, desired or advantageous thermal insulation while improving durability, and the binding between the fibrous support and the aerogel may be improved, thereby reducing or preventing dust generation.

As another example, the fibrous support may be included so as to account for about 25 wt% to 60 wt%, the aerogel may be included so as to account for about 30 wt% to 70 wt%, the binder may be included so as to account for about 2 wt% to 15 wt%, and the dispersant may be included so as to account for about 0.1 wt% to 5 wt%, based on the total amount of the aerogel layer.

As a an example, the fibrous support may be included so as to account for about 30 wt% to 50 wt%, the aerogel may be included so as to account for about 40 wt% to 60 wt%, the binder may be included so as to account for about 5 wt% to 10 wt%, and the dispersant may be included so as to account for about 0.1 wt% to 3 wt%, based on the total amount of the aerogel layer. When the aerogel layer is formed within any of the above ranges, the dispersibility of the aerogel may be improved, to realize improved, desired or advantageous thermal insulation while improving durability, and to improve the binding between the fibrous support and the aerogel, thereby reducing or preventing dust generation.

In the aerogel layer, the surface of the fibrous support may be coated with the aerogel. In this case, the aerogel and the fibrous support may be substantially uniformly distributed, and the binding between the aerogel and the fibrous support may be increased, which may reduce dust generation due to aerogel detachment.

In an example embodiment, the aerogel layer may be formed in a monolayer structure or a multilayer structure. When the aerogel layer is formed in a multilayer structure, the aerogel layer may be formed so as to have about 2 to 10 layers, about 2 to 7 layers, or about 2 to 5 layers.

A method of manufacturing a battery insulation sheet according to an example embodiment may include applying an aerogel composition to a first substrate, laminating a second substrate on the applied aerogel composition to manufacture a laminate, controlling the thickness of the laminate, and drying the laminate. The method of manufacturing the battery insulation sheet may be performed through a one-step process that does not require a separate lamination process of the substrate and the aerogel layer.

In an example method of manufacturing the battery insulation sheet, a detailed description of each of the first substrate and the second substrate may be similar to, or the same as described above.

In applying the aerogel composition to the first substrate, the aerogel composition may be directly applied to the first substrate.

In applying the aerogel composition to the first substrate, the first substrate may have a thin film structure having a long axis and a short axis, and the aerogel composition may be applied to the first substrate in the long axis direction or the short axis direction. As an example, the aerogel composition may be applied to the first substrate in the short axis direction. In this case, internal pores may be controlled by reducing or preventing formation of bubble droplets in the resulting aerogel layer.

An example method of manufacturing the aerogel composition may include mixing a solvent with a functional material that comprises a binder, a dispersant, or a combination thereof to manufacture a solvent mixture, mixing the solvent mixture with aerogel powder to manufacture an aerogel mixture, and mixing the aerogel mixture with a fibrous support to manufacture an aerogel composition.

In an example embodiment, in mixing the solvent with the functional material to manufacture the solvent mixture, the solvent may be mixed with the binder, or the solvent may be mixed with the binder and the dispersant. A detailed description of each of the binder and the dispersant may be similar to, or the same as described above.

In an example embodiment, the solvent may be at least one of a polar solvent and a non-polar solvent.

The polar solvent may include water, an alcohol-based solvent, or a combination thereof.

Water may include, for example, purified water, deionized water, or a combination thereof.

The alcohol-based solvent may consist of or comprise at least one selected from the group consisting of, for example, without being limited to, methanol, ethanol, propanol, pentanol, butanol, hexanol, ethylene glycol, propylene glycol, diethylene glycol, and glycerol.

The non-polar solvent may include a hydrocarbon-based solvent. For example, the hydrocarbon-based solvent may consist of or comprise at least one selected from the group consisting of hexane, pentane, heptane, toluene, and benzene, and may be, without being limited to, an alkane solvent such as hexane or a mixture including an alkane solvent.

The solvent may include water. The use of water as a solvent may effectively reduce raw material costs and post-processing costs. When water is used as a solvent, water may not sufficiently mix with aerogel, which is hydrophobic. In an example embodiment, the aerogel may be dispersed substantially evenly by controlling the design of a mixing process, the mixing conditions, the addition of the binder and the dispersant, and the amount of the binder and the dispersant. This substantially even dispersion of the aerogel in the composition may enable the formation of a battery insulation sheet having improved, desired or advantageous thermal insulation, durability, and dustiness at a low thickness without the use of a large amount of binder.

The solvent may be included such that the weight ratio of the solvent to the total amount of solids in the aerogel composition is about 1:1 to 1:90. For example, the weight ratio of the solvent to the total amount of solids in the aerogel composition may be about 1:50 to 1:70, about 1:20 to 1:30, or about 1:2 to 1:10. By controlling the weight ratio of the solvent to the total amount of solids in the aerogel composition within any one of the above ranges, the viscosity may be controlled to coat the aerogel layer.

In mixing the solvent mixture with aerogel powder to manufacture the aerogel mixture, a detailed description of the aerogel powder may be similar to, or the same as described above.

In mixing the aerogel mixture with the fibrous support to manufacture the aerogel composition, a detailed description of the fibrous support may be similar to, or the same as described above.

In each of mixing the solvent with the functional material including the binder, the dispersant, or the combination thereof to manufacture the solvent mixture, mixing the solvent mixture with the aerogel powder to manufacture the aerogel mixture, and mixing the aerogel mixture with the fibrous support to manufacture the aerogel composition, the mixing may be performed using a mixer. For example, the mixer may include, without being limited to, a planetary mixer and a Thinky™ mixer.

As an example, the planetary mixer may be used to mix the solvent mixture with the aerogel powder. The use of the planetary mixer to mix the solvent mixture with the aerogel powder may allow the aerogel powder to be substantially uniformly dispersed in the solvent.

The planetary mixer may be a device that may be used to mix or stir different substances in order to produce a substantially homogeneous mixture. The planetary mixer may include a blade capable of performing planetary motion.

In an example embodiment, the planetary mixer may include at least one of one or more planetary blades and one or more high-speed dispersing blades. As an example, the planetary mixer may include at least one planetary blade and at least one high-speed dispersing blade.

Each, or at least one, of the planetary blade and the high-speed dispersing blade may substantially continuously rotate about an axis thereof. The rotation speed may be expressed in rotations per minute (rpm).

In an example embodiment, the planetary mixer may include a first blade and a second blade having different axes of rotation. For example, the first blade may be a low speed blade, and the second blade may be a high speed blade. The low speed and the high speed refer to relative rotational speeds between the first blade and the second blade. As an example, the first blade may be an open blade, and the second blade may be a Despa™ blade.

The rotational speed of the first blade may be, for example, about 10 rpm to 100 rpm, about 10 rpm to 60 rpm, or about 30 rpm to 70 rpm. The rotational speed of the second blade may be, for example, about 100 rpm to 2000 rpm, about 100 rpm to 1000 rpm, about 300 rpm to 1700 rpm, or about 500 rpm to 1700 rpm.

When the functional material is added to and mixed with the solvent, the rotational speed of the first blade may be about 10 rpm to 60 rpm, about 20 rpm to 50 rpm, or about 30 rpm to 40 rpm, and the rotational speed of the second blade may be about 300 rpm to 1700 rpm, about 600 rpm to 1000 rpm, or about 700 rpm to 800 rpm. When the solvent and the functional material are mixed with each other, as described above, the solvent mixture in which the binder, the dispersant, or the combination thereof is substantially uniformly dispersed may be manufactured to facilitate mixing of the aerogel in a subsequent process.

When the solvent mixture and the aerogel powder are mixed with each other, the rotational speed of the first blade of the mixer may be about 30 rpm to 70 rpm, about 40 rpm to 70 rpm, or about 60 rpm to 70 rpm, and the rotational speed of the second blade may be about 500 rpm to 1700 rpm, about 600 rpm to 1600 rpm, or about 800 rpm to 1500 rpm. When the aerogel powder is added to and mixed with the solvent mixture, as described above, the aerogel powder may be hindered or prevented from clumping together to induce uniform dispersion.

When the aerogel mixture and the fibrous support are mixed with each other, the rotational speed of the first blade of the mixer may be from about 10 rpm to 60 rpm, about 20 rpm to 50 rpm, or about 30 rpm to 40 rpm, and the rotational speed of the second blade may be from about 300 rpm to 1700 rpm, about 400 rpm to 1500 rpm, or about 800 rpm to 1200 rpm. Mixing the aerogel mixture with the fibrous support as described above may remove air bubbles in the composition, control the viscosity, and facilitate dispersion of the fibrous support in the evenly dispersed aerogel, such that the aerogel surrounds the periphery of the fibrous support in the composition. A binder may be present between the aerogel and the fibrous support to improve the binding between the aerogel and the fibrous support.

Applying the aerogel composition to the first substrate may be performed using an ordinary method of applying a slurry to a substrate.

Applying the aerogel composition to the first substrate may be performed once or repeatedly performed twice or more.

In an example embodiment, the aerogel composition may further include a silane-based compound. The silane-based compound may consist of or comprise at least one selected from the group consisting of, for example, 3-(trimethoxysilyl)propylmethacrylate, methyltriethoxysilane, methyltrimethoxysilane, ethyltrimethoxysilane, octadecyltrimethoxysilane, ethyltriethoxysilane, and 3-glycidoxypropyltrimethoxysilane. Further inclusion of the silane-based compound may further improve dispersibility.

In an example embodiment, the aerogel composition may optionally further include an additive, such as, e.g., a wetting agent, an emulsifier, a compatibilizer, a viscosity modifier, a pH modifier, a stabilizer, an antioxidant, an acid or base trapping agent, a metal inactivator, a defoamer, an antistatic agent, a thickener, an adhesion improver, a coupling agent, a flame retardant, an impact modifier, a pigment, a dye, a colorant, a deodorant, or the like.

In an example embodiment, an aerogel composition may be applied to the first substrate, and a second substrate may be laminated on the applied aerogel composition to form a structure in which the first substrate, the aerogel layer, and the second substrate are laminated, e.g., sequentially laminated, without an adhesive.

In an example embodiment, in controlling the thickness of the laminate, the thickness of the laminate may be controlled by pressing using a roller. As an example, the laminate may be allowed to pass through gap rollers having a target gap thickness to control the thickness of the laminate.

In an example embodiment, in drying the laminate, drying may be performed at a temperature of, for example, about 25 °C to 100 °C, about 45 °C to 90 °C, or about 60 °C to 85 °C. By drying the laminate at any of the above temperature ranges, a solid aerogel layer may be formed on the substrate without having to add a separate adhesive member or adhesive, while reducing or preventing the separation between the substrate and the aerogel layer, and a coating layer may be formed in the shape in which the periphery of each of a plurality of dispersed fibrous supports is coated with the aerogel.

In an example embodiment, pressing the laminate and drying the laminate may be performed separately, contemporaneously or simultaneously.

By manufacturing a battery insulation sheet using the method according to the example embodiment, it is possible to readily manufacture a battery insulation sheet without using a separate adhesive or forming an adhesive layer, and the battery insulation sheet may have improved, desired or advantageous thermal insulation, durability, and dustiness even with a small thickness due to the uniform dispersion of an aerogel.

A battery module according to an example embodiment may include a plurality of cells and the battery insulation sheet provided between the plurality of cells, wherein the first substrate and the second substrate of the battery insulation sheet may face cells adjacent thereto.

FIG. 2 is a schematic view showing the battery insulation sheet according to an example embodiment formed between a plurality of cells.

Referring to FIG. 2, the battery insulation sheet 100 according to the example embodiment may be formed between a plurality of cells 200 included in a battery module. One surface of the battery insulation sheet 100 having the first substrate formed thereon and the other surface of the battery insulation sheet 100 having the second substrate formed thereon may face the cells 200 adjacent thereto. When the battery insulation sheet 100 according to the example embodiment is formed between the plurality of cells 200, the resulting battery module may be capable of blocking flames in one cell in advance, thereby substantially inhibiting the propagation of the flames to the other cell 200 with a higher level of safety, as well as a battery pack including the battery module.

Hereinafter, examples are described. However, the following examples are intended only to illustrate or describe the disclosure and should not be construed as limiting the disclosure. Details that are not described herein may be sufficiently technically inferred by those skilled in the art, and therefore a description thereof will be omitted.

**(Manufacture of battery insulation sheet)**

**Example 1**

1. Manufacture of aerogel composition

A solvent mixture was manufactured by adding polyvinyl alcohol (Sigma Aldrich), as a binder, to deionized water, as a solvent, and mixing the same at 30 rpm using an open blade and at 700 rpm using a Despa™ blade. Subsequently, aerogel powder having a BET value of 800 m$^2$/g was added to the solvent mixture and mixed at 70 rpm using the open blade and at 1500 rpm using the Despa™ blade to manufacture an aerogel mixture. An aerogel composition was manufactured by adding glass wool to the aerogel mixture and mixing the same at 30 rpm using the open blade and at 1200 rpm using the Despa™ blade. A planetary mixer (DNTEK, PT-005) was used for mixing.

The solids content of the manufactured aerogel composition was found to be 50 wt% of the aerogel, 40 wt% of glass wool, and 10 wt% of the polyvinyl alcohol.

2. Manufacture of battery insulation sheet

A slurry of the manufactured aerogel composition was applied to a mica sheet (Pamica™, Muscovite™) having a thickness of 0.1 mm and an air permeability of 1,000 sec/100cc, another 0.1 mm thick mica sheet was laminated thereon in a sandwich manner, and coating was performed while adjusting the thickness using a roll-rolling method. Subsequently, an aerogel layer was formed by drying at 60 °C for 24 hours to manufacture a battery insulation sheet. The total thickness of the manufactured battery insulation sheet was found to be 1.48 mm.

**Example 2**

A battery insulation sheet was manufactured using the same method as in Example 1 with a difference that an aerogel composition having a solids content of 60 wt% aerogel, 25 wt% glass wool, and 15 wt% polyvinyl alcohol was manufactured by adjusting the input of raw materials in manufacturing the aerogel composition.

**Example 3**

A battery insulation sheet was manufactured using the same method as in Example 1 with a difference that an aerogel composition having a solids content of 65 wt% aerogel, 25 wt% glass wool, and 10 wt% polyvinyl alcohol was manufactured by adjusting the input of raw materials in manufacturing the aerogel composition.

**Example 4**

A battery insulation sheet was manufactured using the same method as in Example 1 with a difference that an aerogel composition having a solids content of 45 wt% aerogel, 50 wt% glass wool, and 5 wt% polyvinyl alcohol was manufactured by adjusting the input of raw materials in manufacturing the aerogel composition.

**Example 5**

A battery insulation sheet was manufactured using the same method as in Example 1 with a difference that an aerogel composition having a solids content of 50 wt% aerogel, 49.7 wt% glass wool, and 0.3 wt% polyvinyl alcohol was manufactured by adjusting the input of raw materials in manufacturing the aerogel composition.

**Example 6**

A battery insulation sheet was manufactured using the same method as in Example 1 with a difference that an aerogel composition having a solids content of 40 wt% aerogel, 35 wt% glass wool, and 25 wt% polyvinyl alcohol was manufactured by adjusting the input of raw materials in manufacturing the aerogel composition.

**Example 7**

A battery insulation sheet was manufactured using the same method as in Example 1 with a difference that water-dispersible polyurethane was used as a binder instead of polyvinyl alcohol in manufacturing an aerogel composition.

**Example 8**

1. Manufacture of aerogel composition

A solvent mixture was manufactured by adding polyvinyl alcohol (Sigma Aldrich), as a binder, and a surfactant (Triton-X100, Sigma Aldrich), as a dispersant, to deionized water, as a solvent, and mixing the same at 30 rpm using an open blade and at 700 rpm using a Despa™ blade. Subsequently, aerogel powder having a BET value of 800 m$^2$/g was added to the solvent mixture and mixed at 70 rpm using the open blade and at 1500 rpm using the Despa™ blade to manufacture an aerogel mixture. An aerogel composition was manufactured by adding glass wool to the aerogel mixture and mixing the glass wool and aerogel mixture at 30 rpm using the open blade and at 1200 rpm using the Despa™ blade. A planetary mixer (DNTEK, PT-005) was used for mixing.
The solids content of the manufactured aerogel composition was found to be 50 wt% of the aerogel, 40 wt% of the reinforcement material, 9.9 wt% of polyvinyl alcohol, and 0.1 wt% of the dispersant.

2. Manufacture of battery insulation sheet

A slurry of the manufactured aerogel composition was applied to a mica sheet (Pamica™, Muscovite™) having a thickness of 0.1 mm and an air permeability of 1,000 sec/100cc, another 0.1 mm thick mica sheet was laminated thereon in a sandwich manner, and coating was performed while adjusting the thickness using a roll-rolling method. Subsequently, an aerogel layer was formed by drying at 60 °C for 24 hours to manufacture a battery insulation sheet. The total thickness of the manufactured battery insulation sheet was found to be 1.48 mm.

**Example 9**

1. Manufacture of aerogel composition

A solvent mixture was manufactured by adding polyvinyl alcohol (Sigma Aldrich), as a binder, water-dispersible polyurethane, and a surfactant (Triton-X100, Sigma Aldrich), as a dispersant, to deionized water, as a solvent, and mixing the same at 30 rpm using an open blade and at 700 rpm using a Despa™ blade. Subsequently, aerogel powder having a BET value of 800 m$^2$/g was added to the solvent mixture and mixed at 70 rpm using the open blade and at 1500 rpm using the Despa™ blade to manufacture an aerogel mixture. An aerogel composition was manufactured by adding glass wool to the aerogel mixture and mixing the same at 30 rpm using the open blade and at 1200 rpm using the Despa™ blade. A planetary mixer (DNTEK, PT-005) was used for mixing.

The solids content of the manufactured aerogel composition was found to be 50 wt% of the aerogel, 40 wt% of glass wool, 3 wt% of polyvinyl alcohol, 6.9 wt% of water-dispersible polyurethane, and 0.1 wt% of the dispersant.

2. Manufacture of battery insulation sheet

A slurry of the manufactured aerogel composition was applied to a mica sheet (Pamica™, Muscovite™) having a thickness of 0.1 mm and an air permeability of 1,000 sec/100cc, another 0.1 mm thick mica sheet was laminated thereon in a sandwich manner, and coating was performed while adjusting the thickness using a roll-rolling method. Subsequently, an aerogel layer was formed by drying at 60 °C for 24 hours to manufacture a battery insulation sheet. The total thickness of the manufactured battery insulation sheet was found to be 1.48 mm.

**Comparative Example 1**

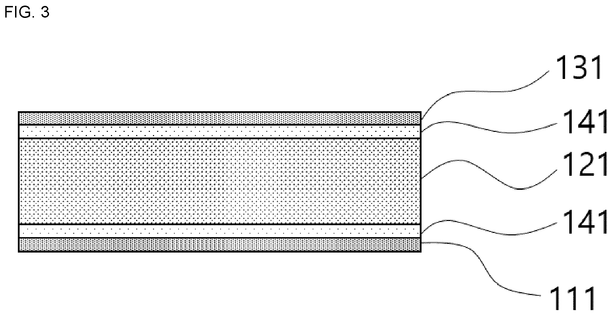

A battery insulation sheet having a structure shown in FIG. 3 was manufactured, and FIG. 3 is a schematic view showing the structure of a battery insulation sheet according to this Comparative Example 1. A 1.2 mm thick insulation layer 121 was prepared. The insulation layer 121 was formed by impregnating a glass wool blanket with an aerogel precursor at a low temperature and a reduced pressure, gelatinizing the same, and supercritically drying the same. The composition of the insulation layer 121 was 45 wt% of an aerogel, 45 wt% of glass wool, and 10 wt% of a binder. The insulation layer 121 thus manufactured is not self-adhesive and requires an adhesive process so as to be laminated onto a substrate. Therefore, an adhesive layer 141 of 0.05 mm was formed on each of upper and lower surfaces of the insulation layer 121 using lamination, hot melting, or double-sided tape, and 0.1 mm thick mica sheets were attached to the receptive adhesive layers 141 as a first substrate 111 and a second substrate 131. The total thickness of the insulation layer 121, the adhesive layers 141, the first substrate 111, and the second substrate 131 was 1.5 mm.

**(Experimental Examples)**

**Experimental Example 1: Evaluation of thermal insulation**

Thermal insulation of each of the insulation sheets manufactured in Examples 1 to 9 and Comparative Example 1 was evaluated.

Each insulation sheet was put between a pair of opposing 1 mm thick aluminum plates and was placed on a heat press. An upper plate of the heat press was heated to 350 °C, and a lower plate of the heat press was not heated and was maintained at a starting temperature of 40 °C. Subsequently, a pressure of 20 kN was applied to the lower plate of the heat press, and the highest temperature of the lower plate of the heat press in 11 minutes was measured. The results are shown in Table 1 below.

**Experimental Example 2: Evaluation of compressibility**

Compressibility of each of the insulation sheets manufactured in Examples 1 to 9 and Comparative Example 1 was evaluated.

After a zero point was adjusted, each insulation sheet was inserted between aluminum plates each having a thickness of 1 mm, and the compression rate of the insulation sheet was measured at a compression speed of 0.02 mm/second from 0 kN to 80 kN using a Universal Testing Machine (UTM). Subsequently, the thickness of the insulation sheet at 5 kN and the thickness of the insulation sheet at 40 kN were measured, and the thickness reduction rate was expressed as a compression rate. The results are shown in Table 1 below.

**Experimental Example 3: Evaluation of dustness**

Dustness of each of the insulation sheets manufactured in Examples 1 to 9 and Comparative Example 1 was evaluated.

Each insulation sheet was weighed before evaluation. Subsequently, the insulation sheet was placed on a rubber plate and struck with a rubber mallet at five points, including the apex and the center, of the insulation sheet, at a constant rate, dusted off, and weighed. Subsequently, the weight reduction rate was calculated by comparing the weights before and after physical impact, and the results are shown in Table 1 below.

**Experimental Example 4: Evaluation of compression density**

Compression density of each of the insulation sheets manufactured in Examples 1 to 9 and Comparative Example 1 was evaluated.

The mass per unit volume (unit) of each aerogel layer was measured, and the mass per unit volume $(g/mm^3)$ was calculated using the thickness and area of the aerogel layer after vertically applying a pressure of 0 kN (or no pressure), 5 kN, 20 kN, and 40 kN to the aerogel layer using a UTM using the same or a similar method as the compressibility evaluation method, and the values of PD1 and PD2 discussed above were derived by substituting the measured mass per unit volume of the aerogel layer before and after compression into Formula 1 and Formula 2 discussed above, respectively. In Comparative Example 1, compression density of the insulation layer was evaluated. The results are shown in Table 1 below.

[Table 1]

| | Example | | | | | | | | | Comparative Example |
|---|---|---|---|---|---|---|---|---|---|---|
| | 1 | 2 | 3 | 4 | 5 | 6 | 7 | 8 | 9 | 1 |
| Lower plate temperature(°C) | 85.2 | 85.7 | 83.6 | 86.1 | 86.6 | 97.6 | 86.6 | 84.5 | 83.2 | 88.3 |
| Compression rate (%) | 46.3 | 42.1 | 40.3 | 45.5 | 42.0 | 39.9 | 43.6 | 47.5 | 47.9 | 41.9 |
| Weight reduction rate (%) | 1.7 | 1.5 | 2.3 | 2.5 | 4.8 | 1.7 | 2.8 | 1.3 | 0.8 | 5.2 |
| PD1 | 0.26 | 0.26 | 0.28 | 0.27 | 0.27 | 0.26 | 0.27 | 0.29 | 0.30 | 0.26 |
| PD2 | 0.27 | 0.26 | 0.31 | 0.30 | 0.32 | 0.27 | 0.28 | 0.32 | 0.33 | 0.23 |

Referring to Table 1 above, in the case of Examples 1 to 9, thermal insulation, dustiness, and compressibility were all improved, desired or advantageous. Referring to Examples 1 to 4, there was a change in thermal insulation and dustiness depending on the component content of the aerogel composition. In the case of Example 5, dustiness and compressibility were somewhat reduced due to a change in the components of the aerogel composition, but thermal insulation was improved. In the case of Example 6, thermal insulation and compressibility were somewhat reduced. In the case of Example 7, dustiness was somewhat reduced because a binder having fire resistance typically may not act as a dispersant, but thermal insulation was improved. In Example 8, in which the binder and the dispersant were mixed, thermal insulation, dustiness, and compressibility were improved. In Example 9, in which polyvinyl alcohol and the water-dispersible polyurethane-based binder were mixed, thermal insulation, dustiness, and compressibility were further improved. In Examples 1 to 9, the value of PD1 was within a range of 0.1 to 0.5, which shows improved, desired or advantageous resistance to external impact or pressing, and the value of PD2 was within a range of 0.3 to 0.8, which shows improved, desired or advantageous resistance to swelling of an inner cell.

In the case of Comparative Example 1, dustiness and swelling resistance were substantially reduced when compared to the other Examples. When the insulation sheet is manufactured as in Comparative Example 1, an additional adhesive process is required to join the insulation layer 121 illustrated in FIG. 3 and the mica sheet 131 to each other using the adhesive 141, which increases the process cost, and the aerogel is embedded in the surface of the blanket while having a large particle size, whereby the aerogel may readily detach from the blanket, and therefore a large amount of dust may be generated. In the case of Comparative Example 1, the input of the aerogel according to the method is limited, and it may be challenging to quantitatively input the aerogel.

Thus, when an aerogel composition according to an example embodiment is used, thermal insulation, compressibility, and dustiness are improved, desired or advantageous.

As is apparent from the above description, a battery insulation sheet according to an example embodiment may have improved, desired or advantageous thermal insulation and durability, may have improved, desired or advantageous thermal insulation and compressibility due to inclusion of an aerogel layer in which an aerogel is present in a coating state, may have a low manufacturing process cost, and may reduce or prevent generation of dust from the aerogel during a manufacturing process and in actual use.

While the foregoing describes example embodiments, the disclosure is not limited thereto, and it is contemplated that various modifications may be made within the scope of the claims, the detailed description of example embodiments, and the accompanying drawings, which also fall within the scope of the disclosure.

**Claims**

1. A battery insulation sheet comprising:

    a first substrate (110, 111);
    an aerogel layer (120); and
    a second substrate (130); wherein:

       the first substrate (110, 111), the aerogel layer and the second substrate (130) are sequentially laminated; and
       each of opposite surfaces of the aerogel layer (120) is in contact with the first substrate (110, 111) or the second substrate (130) adjacent thereto.

2. The battery insulation sheet as claimed in claim 1, wherein a separate layer comprising an adhesive between the aerogel layer (120) and the first substrate (110, 111) or the second substrate (130) is omitted.

3. The battery insulation sheet as claimed in claim 1 or 2, wherein the aerogel layer (120) satisfies:

    $0.1 \leq PD1 \leq 0.5$, $PD1 = PA/PB$;
    where PA indicates a mass per unit volume ($g/cm^3$) of the aerogel layer after a pressure of 0 kN is vertically applied to the aerogel layer, and PB indicates the mass per unit volume ($g/cm^3$) of the aerogel layer after a pressure of 5 kN is vertically applied to the aerogel layer; and/or
    the aerogel layer (120) satisfies:
    $0.1 \leq PD2 \leq 0.4$, $PD2 = PB/PC$;

    where PB indicates a mass per unit volume ($g/cm^3$) of the aerogel layer after a pressure of 5 kN is vertically applied to the aerogel layer, and PC indicates the mass per unit volume ($g/cm^3$) of the aerogel layer after a pressure of 20 kN is vertically applied to the aerogel layer.

4. The battery insulation sheet as claimed in one of the preceding claims, wherein at least one of the first substrate (110, 111) and the second substrate (130) comprises at least one selected from a group consisting of a resin, a metal, and an inorganic material other than the metal.

5. The battery insulation sheet as claimed in one of claims 1 to 3, wherein at least one of the first substrate (110, 111) and second substrate (130) comprises an inorganic material having an air permeability of 800 sec/100cc to 40,000 sec/100cc determined according to ISO 5635-5.

6. The battery insulation sheet as claimed in one of the preceding claims, wherein the aerogel layer (120) comprises a fibrous support, an aerogel, and a functional material comprising a binder and/or a dispersant.

7. The battery insulation sheet as claimed in claim 6, wherein the fibrous support comprises at least one selected from a group consisting of natural fiber, silica fiber, glass fiber, ceramic fiber, carbon fiber, graphite fiber, mineral fiber, and polymer fiber.

8. The battery insulation sheet as claimed in claim 6, wherein the aerogel has a BET specific surface area of 500 $m^2/g$ to

1,000 m$^2$/g determined according to ISO 9277.

9. The battery insulation sheet as claimed in claim 6, wherein the binder comprises an aqueous polymer binder; and wherein the dispersant is at least one of a surfactant and a phosphate-based salt.

10. The battery insulation sheet as claimed in claim 6, wherein: the fibrous support is included so as to account for 25 wt% to 60 wt%, the aerogel is included so as to account for 30 wt% to 70 wt%, the binder is included so as to account for 2 wt% to 15 wt%, and optionally the dispersant is included so as to account for 0.1 wt% to 5 wt%, based on a total amount of the aerogel layer.

11. The battery insulation sheet as claimed in one of the preceding claims, wherein:

    at least one of the first substrate (110, 111) and the second substrate (130) has a thickness of 0.01 mm to 5 mm; and
    the aerogel layer (120) has a thickness of 1 mm to 10 mm.

12. A method of manufacturing a battery insulation sheet, the method comprising:

    applying an aerogel composition to a first substrate (110, 111);
    laminating a second substrate on the applied aerogel composition to manufacture a laminate;
    controlling a thickness of the laminate; and
    drying the laminate.

13. The method as claimed in claim 12, wherein the aerogel composition is manufactured by:

    mixing a solvent with a functional material comprising a binder and/or a dispersant to manufacture a solvent mixture;
    mixing the solvent mixture with aerogel powder to manufacture an aerogel mixture; and
    mixing the aerogel mixture with a fibrous support to manufacture the aerogel composition.

14. The method as claimed in one of claims 12 or 13, wherein controlling the thickness of the laminate comprises controlling the thickness of the laminate by pressing using a roller.

15. A battery module comprising:

    a plurality of cells; and
    the battery insulation sheet as claimed in claim 1 between the plurality of cells, wherein
    the first substrate (110, 111) and the second substrate (130) of the battery insulation sheet are disposed so as to face cells adjacent thereto.

FIG. 1

<u>100</u>

130

120

110

FIG. 2

200

100

200

FIG. 3

131
141
121
141
111

Europäisches
Patentamt

European
Patent Office

Office européen
des brevets

# EUROPEAN SEARCH REPORT

**Application Number**

EP 24 18 5963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 725 582 A (GAC AION NEW ENERGY AUTOMOBILE CO LTD) 8 July 2022 (2022-07-08) * claims 1,8 * | 1-15 | INV. B32B27/20 |
| A | US 10 821 705 B2 (HITACHI CHEMICAL CO LTD [JP]) 3 November 2020 (2020-11-03) * claim 1 * | 1 | ADD. B32B15/08 B32B15/14 B32B15/20 |
| A | US 2006/263587 A1 (OU DUAN L [US] ET AL) 23 November 2006 (2006-11-23) * claim 1 * | 1 | |
| A | CN 113 500 830 A (GUANGDONG HUITIAN AVIATION AND AEROSPACE TECH CO LTD) 15 October 2021 (2021-10-15) * claim 1 * | 1 | |

| | |
|---|---|
| | TECHNICAL FIELDS SEARCHED (IPC) |
| | B32B H01M |

The present search report has been drawn up for all claims

| Place of search | Date of completion of the search | Examiner |
|---|---|---|
| The Hague | 10 December 2024 | Hillebrand, Gerhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 5963

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2024

| Patent document cited in search report | | Publication date | Patent family member(s) | | Publication date |
|---|---|---|---|---|---|
| CN 114725582 | A | 08-07-2022 | NONE | | |
| US 10821705 | B2 | 03-11-2020 | CN | 107921731 A | 17-04-2018 |
| | | | JP | 6943181 B2 | 29-09-2021 |
| | | | JP | WO2017038779 A1 | 14-06-2018 |
| | | | TW | 201713746 A | 16-04-2017 |
| | | | US | 2018250913 A1 | 06-09-2018 |
| | | | WO | 2017038779 A1 | 09-03-2017 |
| US 2006263587 | A1 | 23-11-2006 | US | 2006263587 A1 | 23-11-2006 |
| | | | WO | 2007086819 A2 | 02-08-2007 |
| CN 113500830 | A | 15-10-2021 | CN | 113500830 A | 15-10-2021 |
| | | | WO | 2023279649 A1 | 12-01-2023 |

EPO FORM P0459

For more details about this annex : see Official Journal of the European Patent Office, No. 12/82